# EUROPEAN PATENT APPLICATION

(11) **EP 4 822 590 A1**
(43) Date of publication of application: **14.10.2026**
(21) Application number: 25382377.7
(22) Date of filing: 11.04.2025
(51) Int. Cl.: G06K 19/077, B32B 7/00, B42D 25/00

(54) **CARD-LIKE DATA CARRIER AND METHOD FOR MANUFACTURING A CARD-LIKE DATA CARRIER**

(71) Applicant: Giesecke+Devrient ePayments GmbH, 81677 München (DE)
(72) Inventor: Gali, Josep, 08820 El Prat de Llobregat (Barcelona) (ES)
(74) Representative: LKGLOBAL Partnerschaftsgesellschaft mbB

(57) **Abstract**

The invention relates to a card-like data carrier (1) comprising a first outer layer (11), a first inner layer (21) and a second inner layer (41). The first inner layer (21) is arranged between the second inner layer (41) and the first outer layer (11). The second inner layer (41) comprises an opaque material portion (42), the first outer layer (11) comprises an at least partially transparent material portion (14) and the first inner layer (21) comprises an at least partially transparent material portion (24). The opaque material portion (42) of the second inner layer (41) is visible through the at least partially transparent material portions (14, 24) of the first outer layer (11) and the first inner layer (21) when viewed from a first side (3) of the card-like data carrier (1). The invention further relates to a method for manufacturing a card-like data carrier (1).

## Description

The present invention generally relates to card-like data carriers providing visual depth effects. In particular, the invention relates to a card-like data carrier as well as to a method for manufacturing a card-like data carrier.

Card-like data carriers, in particular smart cards, are widely used in a variety of applications. For example, smart cards may be used as payment cards, credit cards, access cards or identity (ID) cards. Such cards provide a user with various functionalities like identification, authentication, payment or access to specified services, etc. Card-like data carriers often comprise security elements providing optical effects that may be visible to the user. For example, optically variable effects may be provided by using specified inks that contain optically variable pigments applied to a surface or layer of the card-like data carrier such that the user can see the security element changing its color when varying the viewing angle. Furthermore, the card-like data carrier may comprise personal information or identity information that may be visible to the user when contemplating the card-like data carrier. Such information may be presented on the card-like data carrier in a visual pleasant manner, for example by using optical effects as well. There are different approaches to combine the presentation of information on a card-like data carrier with aesthetical features without affecting the readability of such information.

It may be seen as an object of the invention to improve the visualization of information on a card-like data carrier.

A card-like data carrier and a method for manufacturing a card-like data carrier according to the features of the independent claims are provided. Further embodiments of the invention are evident from the dependent claims, the Figures and the following description.

According to an aspect of the invention, a card-like data carrier is provided. The card-like data carrier comprises a first outer layer, a first inner layer and a second inner layer. The first inner layer is arranged between the second inner layer and the first outer layer. The second inner layer comprises an opaque material portion. The first outer layer comprises an at least partially transparent material portion and the first inner layer comprises an at least partially transparent material portion, such that the opaque material portion of the second inner layer is visible through the at least partially transparent material portions of the first outer layer and the first inner layer when viewed by a user from a first side of the card-like data carrier.

The inventive card-like data carrier may provide a visual depth effect where an information provided by the opaque material portion of the second inner layer may be perceived by a user as if it was present inside a card body of the card-like data carrier, e.g., as if it was located behind other information which, for example, is present on the first inner layer or on any other layer between the user and the second inner layer. In other words, the information provided on a front or surface of the card-like data carrier may be seen by the user as being closer to the user than the information provided by the opaque material portion of the second inner layer.

This may be achieved by arranging the at least partially transparent material portion of the first outer layer and the at least partially transparent material portion of the first inner layer in such a way that a line of sight from a viewing point of the user goes straight through these at least partially transparent material portions to the opaque material portion of the second inner layer. The opaque material portion of the second inner layer may be arranged in the vicinity of a core region of the card-like data carrier, for example, in the vicinity of an antenna layer of the card-like data carrier.

The layers of the card-like data carrier which are closer to the first side of the card-like data carrier than the second inner layer may also comprise opaque material portions so that the user may see those (closer) opaque material portions as being located in front of the opaque material portion of the second inner layer. In this manner, it is possible to provide opaque material portions on different layers of the card-like data carrier such that the opaque material portions on the different layers appear as partially overlapping material portions at different depths inside the card-like data carrier when viewed by a user.

In an example, the complete first outer layer is at least partially or fully transparent and/or the first inner layer is at least partially or fully transparent. However, there may be printed portions on the first outer layer and/or on the first inner layer, for example to provide information like personal or identity information. The second inner layer may be completely opaque, for example if the opaque material portion of the second inner layer extends over the entire second inner layer. However, the second inner layer may be a completely transparent layer which includes the opaque material portion, for example on a surface of the second inner layer.

The first outer layer, which may also be referred to as first overlay, may be present in the form of a thin transparent foil and/or may comprise at least one of polyvinyl chloride (PVC), recycled polyvinyl chloride (rPVC), polyethylene terephthalate (PET), polyethylene terephthalate glycol (PETG) or a combination thereof. Furthermore, the first inner layer may comprise at least one of polyvinyl chloride (PVC), recycled polyvinyl chloride (rPVC), polyethylene terephthalate (PET), polyethylene terephthalate glycol (PETG) or a combination thereof. Furthermore, the second inner layer may comprise at least one of polyvinyl chloride (PVC), recycled polyvinyl chloride (rPVC), polyethylene terephthalate (PET), polyethylene terephthalate glycol (PETG) or a combination thereof.

The card-like data carrier may comprise a card body which for example is composed of several card layers. A lamination process may be used to connect the card layers. The card-like data carrier may also comprise a chip module including a chip element which is configured for a contact-based communication with an external reading device. The chip module may be inserted within the card body. The card-like data carrier may further comprise security elements including optically variable elements, e.g., holograms or the like. The card-like data carrier, in particular the card body of the card-like data carrier, may be present in the so-called ID-1 format.

The card-like data carrier may be a smart card, a payment card, a credit card, a debit card, an access card or an identity (ID) card. The card-like data carrier may provide the user with various functionalities like identification, authentication, payment or access to specified services, etc.

According to an embodiment, the card-like data carrier comprises an antenna layer with an antenna element, wherein the antenna layer is arranged between the first inner layer and the second inner layer and wherein the antenna layer comprises an at least partially transparent material portion, such that the opaque material portion of the second inner layer is visible through the at least partially transparent material portions of the first outer layer, the first inner layer and the antenna layer.

When viewed from a first side of the card-like data carrier, the antenna layer and thus the antenna element, for example an antenna, a coil or an electrical conductor of the antenna element, may be located in front of the second inner layer such that the antenna element may appear to the user as if it was in front of the opaque material portion of the second inner layer. In other words, the antenna element may overlap with the opaque material portion of the second inner layer when the card-like data carrier is viewed from the first side thereof. In this manner, further visual effects that include the presence of the antenna element may be provided. The antenna element may be configured for a contactless communication with an external reading device.

The antenna layer may comprise at least one of polyvinyl chloride (PVC), recycled polyvinyl chloride (rPVC), polyethylene terephthalate (PET), polyethylene terephthalate glycol (PETG) or a combination thereof.

According to an embodiment, the antenna layer further comprises an opaque material portion.

The opaque material portion may include an information like a personal or identity information. For example, the opaque material portion of the antenna layer may include a character string, a text, or a number present in or on the antenna layer. This opaque material portion of the antenna layer may partially overlap with the opaque material portion of the second inner layer when the card-like data carrier is viewed from the first side of the card-like data carrier, for example when viewed perpendicularly to the first side of the card-like data carrier.

According to an embodiment, the opaque material portion of the antenna layer comprises an ink material which is applied onto a surface of the antenna layer and/or which is integrated into the antenna layer.

In case the ink material is applied onto a surface of the antenna layer, the ink material may be located between the first inner layer and the antenna layer. It is also possible that the ink material may be located between the second inner layer and the antenna layer. However, the ink material may be applied onto the surface of the antenna layer and/or may be integrated into the antenna layer such that an at least partially transparent material portion of the antenna layer remains through which the user can see the opaque material portion of the second inner layer.

According to an embodiment, the card-like data carrier further comprises a second outer layer, wherein the second inner layer arranged between the first inner layer and the second outer layer and wherein the second outer layer comprises an at least partially transparent material portion, such that the opaque material portion of the second inner layer is visible through the at least partially transparent material portion of the second outer layer when viewed from a second side of the card-like data carrier.

In particular, the opaque material portion of the second inner layer may be seen by the user from both sides of the card-like data carrier, i.e., from the first side and from second side of the card-like data carrier. The first outer layer, herein also referred to as first overlay, may an outermost layer of the first side of the card-like data carrier while the second outer layer, herein also referred to as second overlay, may an outermost layer of the second side of the card-like data carrier.

The card body of the card-like data carrier may thus include, in the indicated order, the following layers being connected, e.g., laminated, with each other: The first outer layer, the first inner layer, the antenna layer, the second inner layer and the second outer layer. It is noted that additional layers may be included in the card body of the card-like data carrier.

The second outer layer may comprise at least one of polyvinyl chloride (PVC), recycled polyvinyl chloride (rPVC), polyethylene terephthalate (PET), polyethylene terephthalate glycol (PETG) or a combination thereof.

According to an embodiment, the opaque material portion of the second inner layer comprises an ink material which is applied onto a surface of the second inner layer and/or which is integrated into the second inner layer.

In case the ink material is applied onto a surface of the second inner layer, the ink material may be located between the second inner layer and the antenna layer. It is also possible that the ink material may be located between the second inner layer and the second outer layer. However, the ink material may be applied onto the surface of the second inner layer and/or may be integrated into the second inner layer such that an at least partially transparent material portion of the second inner layer remains also in the second inner layer. In this manner, it is possible to allow a user to see through the entire thickness of the card-like data carrier, i.e., by arranging the at least partially transparent material portions of all layers of the card-like data carrier in such a way that the user can see through all these at least partially transparent material portions of the different layers.

According to an embodiment, the first inner layer further comprises an opaque material portion.

The opaque material portion may include an information like a personal or identity information. For example, the opaque material portion of the first inner layer may include a character string, a text, or a number present in or on the first inner layer. This opaque material portion of the first inner layer may partially overlap with the opaque material portion of the antenna layer and/or the opaque material portion of the second inner layer when the card-like data carrier is viewed from the first side thereof, e.g., when the card-like data carrier is viewed perpendicularly to the first side thereof.

According to an embodiment, the opaque material portion of the first inner layer comprises an ink material which is applied onto a surface of the first inner layer and/or which is integrated into the first inner layer.

In case the ink material is applied onto a surface of the first inner layer, the ink material may be located between the first inner layer and the first outer layer. It is also possible that the ink material may be located between the first inner layer and the antenna layer. However, the ink material may be applied onto the surface of the first inner layer and/or may be integrated into the first inner layer such that an at least partially transparent material portion of the first inner layer remains also in the first inner layer. In this manner, it is possible to allow a user to see through the first inner layer and, thus, see the opaque material portion of the second inner layer.

According to an embodiment, the card-like data carrier does not comprise an infrared (IR) blocking ink.

In particular, it is possible to provide a card-like data carrier which is almost entirely made of transparent material and which does not require any infrared blocking ink, but nevertheless allows a proper functioning of the card-like data carrier in the context of automated teller machines (ATMs) and the like. It is noted that credit cards may use infrared blocking ink to ensure functionality with ATMs and other card readers that rely on IR sensors, wherein the IR sensors in the ATM or card readers detect the presence of the card based on the IR absorption properties of the ink. The inventive card-like data carrier may avoid using such IR blocking inks although most of the card-like data carrier may be manufactured from transparent materials.

According to an aspect, a method for manufacturing a card-like data carrier is provided. A step of the method comprises providing a first outer layer having an at least partially transparent material portion. Another step comprises providing a first inner layer having an at least partially transparent material portion. Another step comprises providing a second inner layer having an opaque material portion. Another step comprises arranging the first inner layer between the second inner layer and the first outer layer. Another step comprises connecting the first inner layer, the second inner layer and the first outer layer, such that, in a connected state, the opaque material portion of the second inner layer is visible through the at least partially transparent material portion of the first outer layer and the at least partially transparent material portion of the first inner layer when viewed from a first side of the card-like data carrier.

Exemplary embodiments of the invention are explained in more detail below with reference to schematic drawings.
- Fig. 1: shows a schematic side view of a card-like data carrier.
- Fig. 2: shows a schematic top view of the card-like data carrier of Fig. 1.
- Fig. 3: shows a schematic side view of another card-like data carrier.
- Fig. 4: shows a schematic top view of the card-like data carrier of Fig. 3.
- Fig. 5: shows a flow diagram of a method for manufacturing a card-like data carrier.

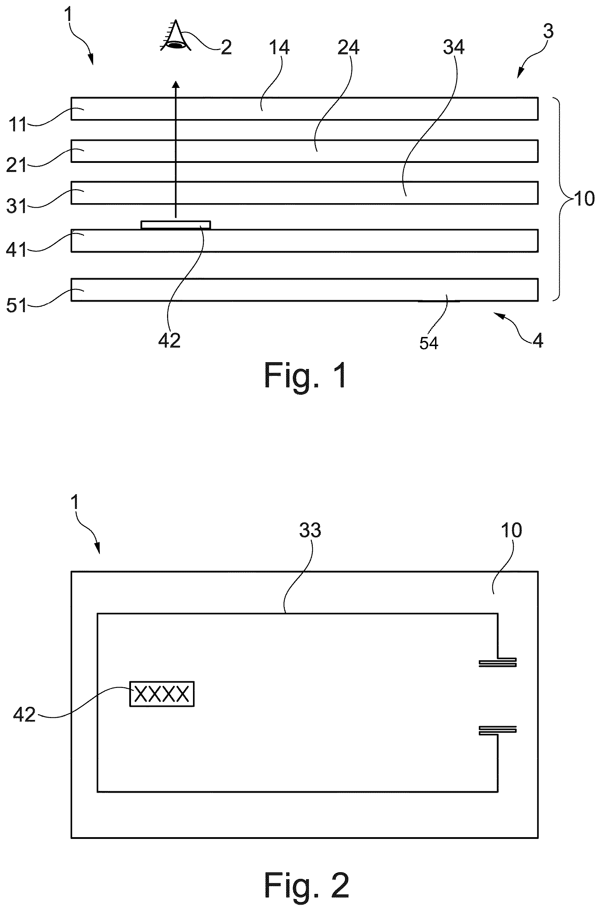

Fig. 1 shows a schematic side view of a card-like data carrier 1. The card-like data carrier 1 comprises a card body 10 having the shape of an ID-1 format. The card body 10 has a layered structure in which different layers have been connected in a lamination process. For the sake of clarity, Fig. 1 shows all layers of the card body 10 separated from each other, i.e., in an exploded view. The card-like data carrier 1 has a first side 3 and a second side 4 between which all layers of the card-like data carrier 1 are present.

The card-like data carrier 1 has a first outer layer 11, a first inner layer 21, an antenna layer 31, a second inner layer 41 and a second outer layer 51. The first outer layer 11 may be a first outermost layer, for example an overlay foil or film, at the first side 3 of the card-like data carrier 1, wherein the first outer layer 11 is connected to a surface of the first inner layer 21. The antenna layer 31 may be connected to another surface of the first inner layer 21. The second inner layer 41 may be connected to the antenna layer 31 and the second outer layer 51 may be connected to the second inner layer 41. The second outer layer 51 may be a second outermost layer, for example an overlay foil or film, at the second side 4 of the card-like data carrier 1.

All layers may have specified material properties in order to provide visual effects for the card-like data carrier 1, which a user 2 may perceive when contemplating the card-like data carrier 1, for example when facing the card-like data carrier 1 at the first side 3 thereof.

The first outer layer 11 may comprise an at least partially transparent material portion 14, the first inner layer 21 may comprise an at least partially transparent material portion 24, the antenna element 31 may comprise an at least partially transparent material portion 34, the second inner layer 41 may comprise an opaque material portion 42 and/or the second outer layer 51 may comprise an at least partially transparent material portion 54.

The opaque material portion 42 of the second inner layer 41 comprises an ink material which is applied onto a surface of the second inner layer 41 and/or which is integrated into the second inner layer 41. In Fig. 1, the opaque material portion 42 is depicted as being applied onto a first (upper) surface of the second inner layer 41. The opaque material portion 42 of the second inner layer 41 may be present in the form of a character string, a text, a number, a symbol, an artwork or any other image or sign that can be viewed by the user 2 when contemplating the card-like data carrier 1 from the first side 3 thereof. Since the first outer layer 11, the first inner layer 21, the antenna layer 31 may be at least partially transparent, the opaque material portion 42 of the second inner layer 41 is visible through the at least partially transparent material portions 14, 24, 34 of the first outer layer 11, the first inner layer 21 and the antenna layer 31 when the car-like data carrier 1 is viewed from the first side 3 as shown in Fig. 1.

It is possible that the first outer layer 11, the first inner layer 21 and the antenna layer 31 are entirely transparent layers, except for an antenna element or chip element possibly located in these layers. In this case, the opaque material portion 42 of the second inner layer 41 may be visible at various viewing angles from the first side 3 of the card-like data carrier 1.

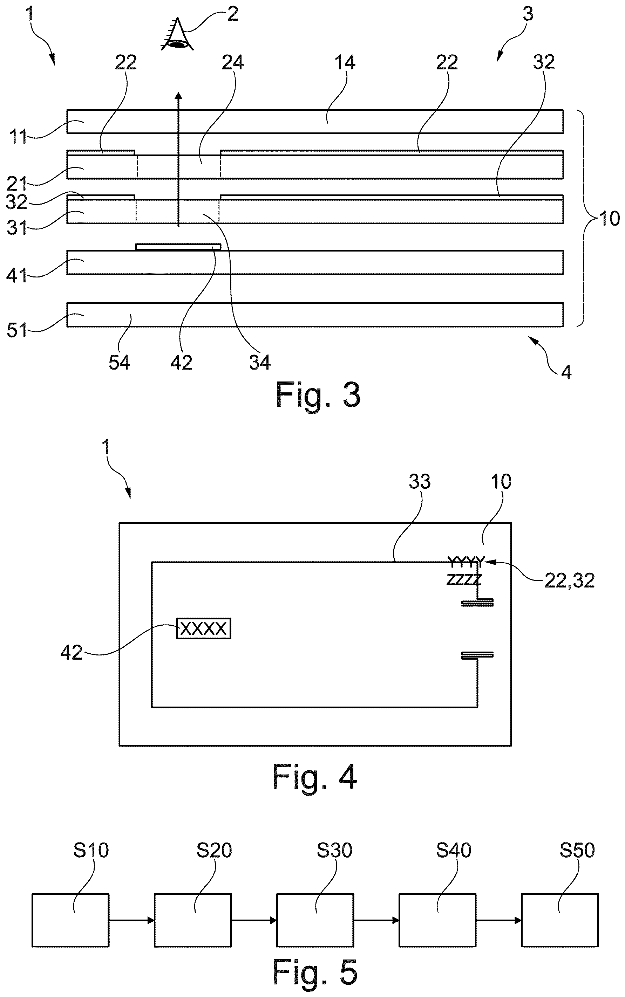

However, it is also possible that some or each of the first outer layer 11, the first inner layer 21 and the antenna layer 31 comprise opaque material portions. In this latter case, the at least partially transparent material portions 14, 24, 34 of the first outer layer 11, the first inner layer 21 and the antenna layer 31 may be arranged such that at least one line of sight (indicated by an arrow in the example of Fig. 1) between the user 2 and the opaque material portion 42 of the second inner layer 41 may be established so that the user 2 can see the opaque material portion 42 of the second inner layer 41. In Fig. 1, a line of sight between the user 2 and the opaque material portion 42 of the second inner layer 41 is perpendicular with respect to the first side 3 of the card-like data carrier 1, and therefore the at least partially transparent material portions 14, 24, 34 of the first outer layer 11, the first inner layer 21 and the antenna layer 31 are located directly above the opaque material portion 42 of the second inner layer 41. Such a configuration will be explained in more detail with respect to Fig. 3 below.

Fig. 2 shows a schematic top view of the card-like data carrier 1 of Fig. 1. As can be seen from this Figure, the antenna layer 31 comprises an antenna element 33 which may at least partially extend within the antenna layer 31, but which may also extend into other layers of the card-like data carrier 1. Fig. 2 shows a top view onto the first side 3 (cf. Fig. 1) of the card-like data carrier 1, in particular onto the card body 10.

As described above, the first outer layer 11, the first inner layer 21 and the antenna layer 31 comprise respective transparent material portions 14, 24, 34 and the opaque material portion 42 of the second inner layer 41 may thus be visible to the user 2 (cf. Fig. 1). In this exemplary case, the opaque material portion 42 of the second inner layer 41 is present in the form of an information, in particular in the form of the character string "XXXX". The card-like data carrier 1 may provide a visual depth effect where the information provided by the opaque material portion 42 of the second inner layer 41 may be perceived by the user 2 user as if it was present inside the card body 10 of the card-like data carrier 1, e.g., as if it was located behind other information which, for example, is present on the first outer layer 11, the first inner layer 21 and/or the antenna layer 31. In other words, the information provided on a front or surface of the card-like data carrier 1 may be seen by the user 2 as being closer to the user 2 than the information provided by the opaque material portion 42 of the second inner layer 41.

This may be achieved by arranging the at least partially transparent material portion 14 of the first outer layer 11, the at least partially transparent material portion 24 of the first inner layer 21 and the at least partially transparent material portion 34 of the antenna layer 31 in such a way that the line of sight (as shown by the arrow in Fig. 1) from a viewing point of the user 2 goes straight through these at least partially transparent material portions 14, 24, 34 to the opaque material portion 42 of the second inner layer 41. The opaque material portion 42 may thus be visible to the user 2 although it is arranged in the vicinity of a core region of the card-like data carrier 1, thereby providing a depth effect to the user 2.

Fig. 3 shows a schematic side view of another card-like data carrier 1. The construction of the card-like data carrier 1 of Fig. 3 may be the same as that of Figures 1 and 2, but the first inner layer 21 and the antenna layer 31 may each have an opaque material portion 22, 32. In particular, the first inner layer 21 may comprise an opaque material portion 22 and the antenna layer 31 may comprise an opaque material portion 32. The opaque material portion 22 of the first inner layer 21 may comprise an ink material which is applied onto a surface of the first inner layer 21 and/or which is integrated into the first inner layer 21. Fig. 3 shows a configuration in which the opaque material portion 22, e.g., the ink material, is applied onto a surface of the first inner layer 21. The opaque material portion 32 of the antenna layer 31 may comprise an ink material which is applied onto a surface of the antenna layer 31 and/or which is integrated into the antenna layer 31. Fig. 3 shows a configuration in which the opaque material portion 32, e.g., the ink material, is applied onto a surface of the antenna layer 31. The opaque material portion 22 of the first inner layer 21 may be present in the form of a character string, a text, a number, a symbol, an artwork or any other image or sign that can be viewed by the user 2 when contemplating the card-like data carrier 1 from the first side 3 thereof. Similarly, the opaque material portion 32 of the antenna layer 31 may be present in the form of a character string, a text, a number, a symbol, an artwork or any other image or sign that can be viewed by the user 2 when contemplating the card-like data carrier 1 from the first side 3 thereof.

As already indicated with respect to Figure 1 above, the at least partially transparent material portions 14, 24, 34 of the first outer layer 11, the first inner layer 21 and the antenna layer 31 are arranged such that a line of sight (indicated by an arrow in the example of Fig. 3) between the user 2 and the opaque material portion 42 of the second inner layer 41 may be established so that the user 2 can see the opaque material portion 42 of the second inner layer 41. In Fig. 3, the line of sight between the user 2 and the opaque material portion 42 of the second inner layer 41 is perpendicular with respect to the first side 3 of the card-like data carrier 1, and therefore the at least partially transparent material portions 14, 24, 34 of the first outer layer 11, the first inner layer 21 and the antenna layer 31 are located directly above the opaque material portion 42 of the second inner layer 41. The opaque material portions 22, 32 of the first inner layer 21 and the antenna layer 31 are arranged such that they do not block the line of sight between the user 2 and the opaque material portion 42, i.e., they are arranged besides the at least partially transparent material portions 24 and 34 in the respective layers 21 and 31. In Fig. 3, an exemplary separation between the opaque material portions 22, 32 and the at least partially transparent material portions 24, 34 in the respective layers 21, 31 are indicated by dashed lines.

In this manner, a visual depth effect may be provided by the opaque material portion 42 of the second inner layer 41 in combination with the opaque material portions 22 and 32 of the first inner layer 21 and the antenna layer 31, respectively. In particular, the card-like data carrier 1 may provide a visual depth effect where an information provided by the opaque material portion 42 of the second inner layer 41 may be perceived by the user 2 as if it was present inside the card body 10 of the card-like data carrier 1, e.g., as if it was located behind an information provided by the opaque material portion 22 of the first inner layer 21 and/or as if it was located behind an information provided by the opaque material portion 32 on the antenna layer 31. In other words, different information may be provided at different layers, that is to say at different levels, depths or heights, inside the card body 10 of the card-like data carrier 1. Such a configuration provides a depth effect to the user 2 such that the user 2 perceives the different information as being located at different depths inside the card body 10 of the card-like data carrier 1.

Fig. 4 now shows a schematic top view of the card-like data 1 carrier of Fig. 3. That is, Fig. 4 shows a top view onto the first side 3 (cf. Fig. 3) of the card-like data carrier 1, in particular onto the card body 10. As can be seen from this Figure, the antenna layer 31 comprises an antenna element 33 which may at least partially extend within the antenna layer 31, but which may also extend into other layers of the card-like data carrier 1.

As described above, the first outer layer 11, the first inner layer 21 and the antenna layer 31 comprise respective transparent material portions 14, 24, 34 and the opaque material portion 42 of the second inner layer 41 may thus be visible to the user 2 (cf. Fig. 3). In this exemplary case, the opaque material portion 42 of the second inner layer 41 is again present in the form of an information, in particular in the form of the character string "XXXX". The card-like data carrier 1 may provide a visual depth effect where the information provided by the opaque material portion 42 of the second inner layer 41 may be perceived by the user 2 as if it was present inside the card body 10 of the card-like data carrier 1, e.g., as if it was located behind the other information provided by the opaque material portions 22, 23 of the first inner layer 21 and the antenna layer 31. In this exemplary case, the opaque material portion 22 of the first inner layer 21 is present in the form of an information, in particular in the form of the character string "YYYY" and the opaque material portion 32 of the antenna layer 31 is present in the form of an information, in particular in the form of the character string "ZZZZ". Both of these information may partially extend over the antenna element 33 of the antenna layer 31 as shown in Fig. 4.

The result is that the information provided by the opaque material portion 32 of the antenna layer 31 may be seen by the user 2 as being closer to the user 2 than the information provided by the opaque material portion 42 of the second inner layer 41. Analogously, the information provided by the opaque material portion 22 of the first inner layer 21 may also be seen by the user 2 as being closer to the user 2 than the information provided by the opaque material portion 42 of the second inner layer 41. Furthermore, the information provided by the opaque material portion 22 of the first inner layer 21 may be seen by the user 2 as being even closer to the user 2 than the information provided by the opaque material portion 32 of the antenna layer 31. Furthermore, the antenna element 33 of the antenna layer 31 may be seen by the user 2 as being closer to the user 2 than the information provided by the opaque material portion 42 of the second inner layer 41.

It is noted that the remainder of the card bod 10, e.g., the remaining portions of the layers 11, 21, 31, 41, 51 may be at least partially transparent or fully transparent such that the user 2 may only see the opaque material portions 22, 32 and 42 at different depths and, in addition, the antenna element 33 and/or other opaque elements like for instance a chip element or a security element of the card-like data carrier 1.

Fig. 5 shows a flow diagram of a method for manufacturing a card-like data carrier 1. A step S10 of the method comprises providing a first outer layer 11 having an at least partially transparent material portion 14. A step S20 of the method comprises providing a first inner layer 21 having an at least partially transparent material portion 24. A step S30 of the method comprises providing a second inner layer 41 having an opaque material portion 42. A step S40 of the method comprises arranging the first inner layer 21 between the second inner layer 41 and the first outer layer 11. A step S50 of the method comprises connecting the first inner layer 21, the second inner layer 41 and the first outer layer 11, such that, in a connected state, the opaque material portion 42 of the second inner layer 41 is visible through the at least partially transparent material portion 14 of the first outer layer 11 and the at least partially transparent material portion 24 of the first inner layer 21 when viewed from a first side 3 of the card-like data carrier 1.

## Claims

1. A card-like data carrier (1), comprising:
a first outer layer (11);
a first inner layer (21);
a second inner layer (41);
wherein the first inner layer (21) is arranged between the second inner layer (41) and the first outer layer (11);
wherein the second inner layer (41) comprises an opaque material portion (42);
wherein the first outer layer (11) comprises an at least partially transparent material portion (14) and the first inner layer (21) comprises an at least partially transparent material portion (24), such that the opaque material portion (42) of the second inner layer (41) is visible through the at least partially transparent material portions (14, 24) of the first outer layer (11) and the first inner layer (21) when viewed from a first side (3) of the card-like data carrier (1).

2. The card-like data carrier (1) of claim 1, comprising:
an antenna layer (31) comprising an antenna element (33);
wherein the antenna layer (31) is arranged between the first inner layer (21) and the second inner layer (41);
wherein the antenna layer (31) comprises an at least partially transparent material portion (34), such that the opaque material portion (42) of the second inner layer (41) is visible through the at least partially transparent material portions (14, 24, 34) of the first outer layer (11), the first inner layer (21) and the antenna layer (31).

3. The card-like data carrier (1) according to claim 2,
wherein the antenna layer (31) further comprises an opaque material portion (32).

4. The card-like data carrier (1) according to claim 3,
wherein the opaque material portion (32) of the antenna layer (31) comprises an ink material which is applied onto a surface of the antenna layer (31) and/or which is integrated into the antenna layer (31).

5. The card-like data carrier (1) according to any one of the preceding claims, comprising:
a second outer layer (51);
wherein the second inner layer (41) is arranged between the first inner layer (21) and the second outer layer (51);
wherein the second outer layer (51) comprises an at least partially transparent material portion (54), such that the opaque material portion (42) of the second inner layer (41) is visible through the at least partially transparent material portion (54) of the second outer layer (51) when viewed from a second side (4) of the card-like data carrier (1).

6. The card-like data carrier (1) according to any one of the preceding claims,
wherein the opaque material portion (42) of the second inner layer (41) comprises an ink material which is applied onto a surface of the second inner layer (41) and/or which is integrated into the second inner layer (41).

7. The card-like data carrier (1) according to any one of the preceding claims,
wherein the first inner layer (21) further comprises an opaque material portion (22).

8. The card-like data carrier (1) according to claim 7,
wherein the opaque material portion (22) of the first inner layer (21) comprises an ink material which is applied onto a surface of the first inner layer (21) and/or which is integrated into the first inner layer (21).

9. The card-like data carrier (1) according to any one of the preceding claims,
wherein the card-like data carrier (1) does not comprise an infrared blocking ink.

10. Method for manufacturing a card-like data carrier (1), comprising:
providing a first outer layer (11) having an at least partially transparent material portion (14, S10);
providing a first inner layer (21) having an at least partially transparent material portion (24, S20);
providing a second inner layer (41) having an opaque material portion (42, S30);
arranging the first inner layer (21) between the second inner layer (41) and the first outer layer (11, S40);
connecting the first inner layer (21), the second inner layer (41) and the first outer layer (11), such that, in a connected state, the opaque material portion (42) of the second inner layer (41) is visible through the at least partially transparent material portion (14) of the first outer layer (11) and the at least partially transparent material portion (24) of the first inner layer (21) when viewed from a first side (3) of the card-like data carrier (1, S50).
